# EUROPEAN PATENT SPECIFICATION

(11) **EP 2 698 855 B1**
(45) Date of publication and mention of the grant of the patent: **21.02.2018**
(21) Application number: 12771481.4
(22) Date of filing: 13.04.2012
(51) Int. Cl.: H01M 4/485, H01M 4/587, H01M 4/525, H01M 4/505, H01M 4/36, H01M 4/133, H01M 4/1315, H01M 4/131, H01M 10/0525, H01M 10/0569

(54) **LITHIUM SECONDARY CELL**
LITHIUMSEKUNDÄRBATTERIE
CELLULE SECONDAIRE AU LITHIUM

(30) Priority: 13.04.2011 JP 2011089193
(43) Date of publication of application: 19.02.2014
(73) Proprietor: NEC Corporation, Minato-ku Tokyo 108-8001 (JP)
(72) Inventor: NOGUCHI, Takehiro, Tokyo 108-8001 (JP); SASAKI, Hideaki, Tokyo 108-8001 (JP); UEHARA, Makiko, Tokyo 108-8001 (JP); MATSUMOTO, Kazuaki, Tokyo 108-8001 (JP); HATAKEYAMA, Hiroshi, Tokyo 108-8001 (JP)
(74) Representative: Glawe, Delfs, Moll
(86) International application number: PCT/JP2012/060157
(87) International publication number: WO 2012/141301

(56) References cited:
- EP-A1- 0 782 207
- WO-A1-2010/090029
- WO-A1-2010/143658
- WO-A1-2012/077712
- JP-A- 10 040 914
- JP-A- 2000 294 281
- JP-A- 2004 014 270
- JP-A- 2007 287 677
- JP-A- 2008 108 689
- JP-A- 2008 176 987
- JP-A- 2010 238 510
- JP-B2- 3 968 772
- JP-B2- 4 281 297
- US-A- 6 103 423
- US-A1- 2005 233 222
- US-A1- 2007 224 516
- US-A1- 2008 081 262
- US-A1- 2008 081 263
- US-A1- 2011 045 360

## Description

### Technical Field

The present invention relates to a lithium secondary cell having high energy density and long cell life.

### Background

A lithium secondary cell has been widely used in potable electronic devices or personal computers, and is intensively studied for miniaturization and weight lightening as well as an increase in energy density.

There are several methods to increase the energy density of such a lithium secondary cell, and among others, a method of raising a cell operating voltage is effectively used. In case of a lithium secondary cell using lithium cobalt oxide or lithium manganate as a positive electrode active substance, an average operating voltage is 3.6∼3.8V (4V class) with respect to metallic lithium. This operating voltage is determined by the redox reaction of Co ion or Mn ion (Co³⁺←→Co⁴⁺ or Mn³⁺←→Mn⁴⁺).

In contrast, a spinel compound in which some of Mn in lithium manganate is substituted with a component such as nickel, for example LiNi_{0.5}Mn_{1.5}O₄ shows a potential plateau in an area above 4.5V and such spinel compounds may be used as a positive electrode active substance to achieve an operating voltage of 5V class. For a positive electrode using a spinel compound, Mn is present as Mn⁴⁺ state, and a cell operating voltage is determined by the redox reaction of Ni²⁺←→Ni⁴⁺ rather than the redox reaction of Mn³⁺←→Mn⁴⁺.

The compound LiNi_{0.5}Mn_{1.5}O₄ has a capacity of 130mAh/g or higher, and an average operating voltage is 4.6V or higher with respect to metallic lithium. This compound has a lithium absorbing capacity smaller than LiCoO₂ but energy density greater than LiCoO₂. Thus, LiNi_{0.5}Mn_{1.5}O₄ is useful for a positive electrode material.

However, since cells using positive electrode active substances having high potential such as LiNi_{0.5}Mn_{1.5}O₄ shows operating voltages higher than cells using substances such as LiCoO₂ or LiMn₂O₄ as a positive electrode active substance, the portions of an electrolytic solution that comes in contact with a positive electrode may be easily degraded. A cell capacity is greatly reduced during charge/discharge cycles or in charge state. In particular, when a cell is used under high-temperature environments, the degradation of an electrolytic solution is largely increased. There is a need to improve cell life when operating at a high temperature above 40°C, as well as to develop an electrolytic solution having high voltage-resistance and long cell life even when used under high-temperature environments for cells having high operating voltages.

To prepare cells of high capacity and low costs, a carbonaceous material is suitably used as a negative electrode active substance of a large cell. Among others, a cell using graphite as a negative electrode active substance has high energy density relative to amorphous carbon, and is suitable for cells having high operating voltages due to such high energy density. However, since graphite has high reactivity to electrolytic solution, it is considered as a material that causes capacity reduction, for example cells using propylene carbonate as a common electrolytic solution. Therefore, for a cell using graphite as a negative electrode active substance, an electrolytic solution having less degradation should be selected.

Specifically, Patent Document 1 discloses a nonaqueous electrolyte secondary cell using a positive electrode of which full charge state voltage is 4.4∼4.6V with respect to metallic lithium, a graphite negative electrode of which surface is coated with amorphous carbons, and a fluorine-substituted cyclic carbonate electrolytic solution. Further, Patent Document 2 discloses a nonaqueous secondary cell using a negative electrode active substance comprising graphite particles on which amorphous carbons are attached, and an electrolytic solution comprising propylene carbonate. However, when secondary cells disclosed in said Patent Documents are used with a positive electrode active substance of which saturated charge state voltage is 4.7V or higher with respect to metallic lithium, cell life is reduced due to the degradation of electrolytic solution. Therefore, there is a need for an additional improvement in these cells.

Additionally, Patent Document 3 discloses a secondary cell using a positive electrode made of an active substance such as LiNi_{0.5}Mn_{1.5}O₄ operating at a high voltage, an amorphous carbon negative electrode, and an electrolytic solution comprising a high dielectric solvent and at least one solvent among dimethyl carbonate and ethyl carbonate. Patent Document 4 discloses a nonaqueous electrolyte cell using a positive electrode active substance represented by LiₓNi_{y}Mn_{2-y}O₄ (0≦x≦1, 0.45≦y≦0.6), a non-graphitizable carbon negative electrode, and propylene carbonate. However, cells disclosed in said Patent Documents has low efficiency during primary charge/discharge. Therefore, there is a need for an additional improvement in energy density in these cells.

In the field of a lithium secondary cell of 5V class having a positive electrode operating voltage above 4.5V with respect to metallic lithium, there is a need for a lithium secondary cell which has high energy density, inhibits the degradation of an electrolytic solution that comes in contact with a positive electrode and a negative electrode, and has particularly long cell life when used under high-temperature environments.

EP0782207 A1 discloses a lithium secondary cell with a mixture of electroylte solvents including a high-oxidation potential solvent, a low viscosity solvent and ethylene carbonate.

Patent Document 1: JP Patent Application Publication No. 2008-108689
Patent Document 2: JP Patent Application Publication No. Hei 10-040914
Patent Document 3: JP Patent No. 4281297
Patent Document 4: JP Patent No. 3968772

### Summary of the Invention

### Problems to Be Resolved by the Invention

It is an objective of the present invention to provide a lithium secondary cell of 5V class having a positive electrode operating voltage of 4.5V or higher with respect to metallic lithium; the lithium secondary cell has high energy density, inhibits the degradation of an electrolytic solution that comes in contact with a positive electrode and a negative electrode, and has particularly long cell life when used under high-temperature environments.

### Means of Solving the Problems

According to the present invention, provided is a lithium secondary cell according to claim 1.

### Effect of the Invention

The lithium secondary cell according to the present invention includes lithium secondary cells of 5V class having a positive electrode operating voltage of 4.5V or higher with respect to metallic lithium wherein the lithium secondary cell has high energy density, inhibits the degradation of an electrolytic solution that comes in contact with a positive electrode and a negative electrode, and has particularly long cell life when it is used under high-temperature environments.

### Brief Description of the Drawings

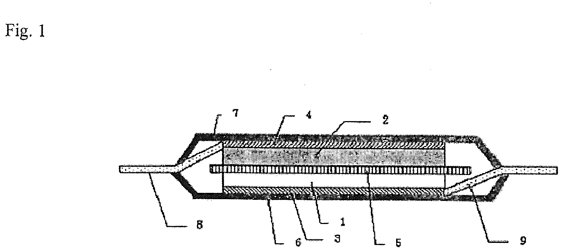

Fig. 1 is a schematic diagram illustrating an example of a lithium secondary cell according to the present invention.

- 1: positive electrode active substance layer
- 2: negative electrode active substance layer
- 3: positive electrode current collector
- 4: negative electrode current collector
- 5: separator
- 6, 7: laminate cover body
- 8: negative electrode tab
- 9: positive electrode tab

### Detailed Description of the Invention

The lithium secondary cell according to the present invention has a positive electrode, a negative electrode, and an electrolytic solution in which the positive electrode and the negative electrode are immersed.

### [Positive electrode]

The positive electrode contains a positive electrode active substance, as well as has a structure that the positive electrode active substance is bonded on a positive electrode current collector by a binding agent for positive electrode.

The positive electrode active substance emits lithium ions into an electrolytic solution during charge and absorbs lithium ions in the electrolytic solution during discharge, and comprises a lithium manganese oxide complex represented by formula (1).

Liₐ(MₓMn_{2-x-y}X_{y})(O_{4-w}Z_{w}) (1)

In the formula (1), M represents one or two or more selected from Co, Ni, Fe, Cr and Cu; X represents one or two or more selected from Li, B, Na, Mg, Al, Ti, Si, K and Ca; Z represents one or two selected from F and Cl; and x, y and z represent numerical values satisfying 0.4≦x≦1.2, 0≦y, x+y<2, 0≦a≦1.2, 0≦w≦1.

In the formula (1), M may be substituted with Mn. To obtain a high capacity active substance having high energy density, it is preferred that M is Ni. If M represents only Ni, it is preferred that x represents values between 0.4 and 0.6 to obtain a lithium-manganese oxide complex of high energy density, and more preferably x is 0.5. "a" satisfies 0≦a≦1.2, and preferably "a" represents 0<a≦1. Specifically, LiNi_{0.5}Mn_{1.5}O₄ has high energy density and a lithium absorbing capacity of 130mAh/g or higher.

In the formula (1), X represents one or two or more elements selected from Li, B, Na, Mg, Al, Ti, Si, K and Ca that may be substituted with Mn. When a lithium-manganese oxide complex contains these elements, the lithium-manganese oxide complex may have prolonged life with respect to charge/discharge of a cell. Among others, it is preferred to contain at least one of Al, Mg, Ti and Si in terms of prolonged life of the lithium-manganese compound oxide, and in particular, for high capacity and long life of the cell, the lithium-manganese oxide complex contains preferably Ti. "y" is preferably greater than 0 but not more than 0.3. If "y" is not more than 0.3, the lowering of cell capacity may be suppressed.

In the formula (1), Z represents one or two elements selected from F and Cl that may be substituted with O. When a lithium-manganese oxide complex contains these elements, the lowering of cell capacity may be suppressed. "w" is preferably greater than 0 but not more than 1.

The lithium-manganese oxide complex represented by the formula (1) is spinel compound, so an operating voltage thereof is 4.5V or higher with respect to metallic lithium.

For the lithium-manganese oxide complex represented by the formula (1), a specific surface area thereof may be for example 0.01∼5m²/g, preferably 0.05∼4m²/g, more preferably 0.1∼3m²/g, and even more preferably 0.2∼2m²/g. When the specific surface area is within the ranges indicated above, an area that comes in contact with an electrolytic solution may be suitably modulated. If the specific surface area of a lithium-manganese oxide complex is at least 0.01m²/g, lithium ions are readily emitted and absorbed in a positive electrode during charge/discharge, and resistance may be more reduced. Also, if the specific surface area of a lithium-manganese oxide complex is not more than 5m²/g, the degradation of an electrolytic solution and leakage of active substance components into the electrolytic solution may be suppressed.

The specific surface area of the lithium-manganese oxide complex may be measured using a gas adsorption type specific surface area-measuring device.

A median particle size of the lithium-manganese oxide complex is preferably 0.1∼50µm, and more preferably 0.2∼40µm. If the median particle size of the lithium-manganese oxide complex is at least 0.1µm, the leakage of components such as Mn into an electrolytic solution and degradation of a positive electrode due to contact with the electrolytic solution may be suppressed. Also, the median particle size of the lithium-manganese compound oxide complex is not more than 50µm, lithium ions are readily emitted and absorbed in the positive electrode during charge/discharge, and resistance may be more reduced.

The median particle size of the lithium-manganese oxide complex may be measured using a laser diffraction/scattering particle size distribution-measuring device.

The lithium-manganese oxide complex represented by the formula (1) may be prepared by weighing a metal oxide such as MnO₂ or NiO and a lithium compound such as lithium carbonate at a desired metal composition ratio, grinding and mixing, and firing at a firing temperature, for example at a temperature of 500∼1000°C. By modulating a firing time, fine particles having specific surface areas indicated above might be obtained.

Also, the positive electrode active substance may further comprise other active substances as long as they do not adversely affect the lithium-manganese oxide complex represented by the formula (1). Examples of other active substances may include LiM1ₓMn₂₋ₓO₄ (M1: elements other than Mn, 0<x<0.4), LiCoO₂, Li(M2ₓMn₁₋ₓ)O₂ (M2: elements other than Mn), Li(M3ₓNi₁₋ₓ)O₂ (M3: elements other than Ni), LiM4PO₄ (M4: including at least Fe, Co, Mn, or Ni), Li₂MSiO₄ (M: at least one of Mn, Fe, Co), or the like. They may be used alone or as any combination of two or more species.

To bind the positive electrode active substance, a binding agent for positive electrode is used. Examples of the binding agent for positive electrode may include polyvinylidene fluoride (PVdF), vinylidene fluoride-hexafluoropropylene copolymer, vinylidene fluoride-tetrafluoroethylene copolymer, styrene-butadiene copolymer rubber, polytetrafluoroethylene, polypropylene, polyethylene, polyimide, polyamideimide, or the like. Among others, polyvinylidene fluoride is preferred in terms of generality or low costs. An amount of the binding agent used is preferably 2∼10 parts by weight with respect to 100 parts by weight of the positive electrode active substance in terms of "sufficient binding ability" and "high energization" that are traded off against each other.

The positive electrode current collector acts to support a positive electrode active substance layer containing the positive electrode active substance bonded by a binding agent, and should have conductivity to transmit electricity to an external terminal. Aluminum, nickel, copper, silver or alloys thereof is preferably used in terms of electrochemical stability. The positive electrode current collector may have any form of foil, flat plate, mesh or the like.

To reduce impedance of the positive electrode active substance, the positive electrode active substance layer may further contain electroconductive-assisting additives. Examples of electroconductive-assisting additives may include carbonaceous particulates such as graphite, carbon black or acetylene black.

The positive electrode may be fabricated onto the positive electrode current collector using materials suitable for the positive electrode active substance layer containing the positive electrode active substance and the binding agent for positive electrode. A method of preparing the positive electrode active substance layer may be any of coating methods such as a doctor blade method, a die coater method, a CVD method, a sputtering method or the like. Alternatively, the positive electrode active substance layer may be previously formed, and then a thin layer of aluminum, nickel or alloys thereof may be formed thereon by a method such as vapor deposition or sputtering to obtain a positive electrode current collector.

### [Negative electrode]

The negative electrode contains a negative electrode active substance, as well as has a structure that the negative electrode active substance is bonded on a negative electrode current collector by a binding agent for negative electrode.

The negative electrode active substance absorbs lithium ions in an electrolytic solution during charge and emits lithium ions into the electrolytic solution during discharge, and it comprises graphite of which surface is coated by low-crystallinity carbon. By using high-crystallinity graphite of which surface is coated by low-crystallinity carbon as the negative electrode active substance, even when the negative electrode contains highly electroconductive graphite, the resulting negative electrode may have high energy density, low reaction with the electrolytic solution, and high cell capacity.

A crystal structure of graphite has preferably 0.33 to 0.34nm of layer spacing in 002 face d₀₀₂, more preferably 0.333 to 0.337nm, and even more preferably up to 0.336nm. Such high-crystallinity graphite has high lithium absorbing capacity, resulting in enhancing charge/discharge efficiency.

The layer spacing of graphite may be measured using X-ray diffraction.

Preferably, the low-crystallinity carbon that coats the surface of the graphite has not less than 0.08 and not more than 0.5 of a ratio of the intensity of D peak (ID) that is emerged in the range of 1300cm⁻¹ to 1400cm⁻¹ to the intensity of G peak (IG) that is emerged in the range of 1550cm⁻¹ to 1650cm⁻¹ (ID/IG) in a Raman spectrum of Laser Raman Analysis. High-crystallinity carbons have low ID/IG values, while low-crystallinity carbons have high ID/IG values. If the ID/IG is at least 0.08, the reaction between the electrolytic solution and the graphite operating a high voltage may be suppressed, and cell life may be prolonged. Also, if the ID/IG is not more than 0.5, the lowering of cell capacity may be suppressed. More preferably, the ID/IG of the low-crystallinity carbon that covers the surface of the graphite is not less than 0.1 and not more than 0.4.

For Laser Raman Analysis of the low-crystallinity carbon, the graphite coating with the low-crystallinity carbon may be measured using Argon ion laser Raman Analyzer. In case of a material having high laser absorption such as carbon, laser is absorbed in several tens nm from the surface of the material. Thus, when the graphite coating with the low-crystallinity carbon is subjected to Laser Raman Analysis, a measurement value may substantially be that of the low-crystallinity carbon on the surface of graphite.

The ID/IG value may be calculated from Laser Raman Spectrum measured according to the following conditions.
Laser Raman Spectroscope: Ramanor T-64000 (Jobin Yvon: manufactured by Atago Co., Ltd.)
Measurement mode: Macro Raman
Measurement arrangement: 60°
Beam size: 100µm
Light source: Ar + Laser (514.5nm)
Laser power: 10mW
Diffraction lattice: Single600gr/mm
Dispersion: Single21A/mm
Slit: 100µm
Detector: CCD (Jobin Yvon1024256).

For the graphite coating with the low-crystallinity carbon, for example, the specific surface area thereof may be 0.01∼20m²/g, preferably 0.05∼10m²/g, more preferably 0.1∼5m²/g, and even more preferably 0.2∼3m²/g. When the specific surface area is within these ranges, an area that comes in contact with an electrolytic solution may be suitably modulated. If the specific surface area of the graphite coating by the low-crystallinity carbon is at least 0.01m²/g, lithium ions are readily emitted and absorbed during charge/discharge, as well as resistance may be more reduced. Also, if the specific surface area is not more than 20m²/g, the degradation of the electrolytic solution and the leakage of active substance components into the electrolytic solution may be suppressed.

For the graphite coating with the low-crystallinity carbon, an average particle size of graphite particles is preferably 5 to 30µm, and a coating thickness of the low-crystallinity carbon is preferably 0.01 to 5µm in terms of high energy density and low reaction with an electrolytic solution.

The average particle size may be measured using a laser diffraction/scattering particle size/particle size distribution-measuring device, for example Microtrack MT3300EX (Nikkiso Co., Ltd.).

Such the graphite coating by the low-crystallinity carbon may be prepared by various methods, such as a gaseous method of depositing carbons generated in thermal degeneration of hydrocarbons such as propane or acetylene on the surfaces of graphite particles having the average particle sizes indicated above, or a method of depositing pitch or tar on the surface of graphite and firing at 800∼1500°C.

The negative electrode active substance may further comprise other active substances as long as they do not adversely affect the low-crystallinity carbon-coating graphite. Examples of other active substances may include metals such as Al, Si, Pb, Sn, Zn, Cd, Sb, In, Bi, Ag, Ba, Ca, Hg, Pd, Pt, Te or La, alloys of two or more species thereof, or alloys of these metals or alloys and lithium. Also, examples may include silicon oxide, aluminum oxide, tin oxide, indium oxide, zinc oxide, lithium oxide, or composites thereof, metal oxides such as LiFe₂O₃, WO₂, MoO₂, SiO, SiO₂, CuO, SnO, SnO₂, Nb₃O₅, LiₓTi₂₋ₓO₄ (1≦x≦4/3), PbO₂ or Pb₂O₅, metal sulfides such as SnS or FeS₂, polyacene or polythiophene, lithium nitrides such as Li₅(Li₃N), Li₇MnN₄, Li₃FeN₂, Li_{2.5}Co_{0.5}N and Li₃CoN, or the like.

To bind the negative electrode active substance, a binding agent for negative electrode is used. Specifically, the same things as the binding agent for positive electrode indicated above may be used as the binding agent for negative electrode. An amount of the binding agent for negative electrode used is preferably 1∼30% by weight with respect to the total amount of the negative electrode active substance and the binding agent for negative electrode, and more preferably 2∼25% by weight. If the content of the binding agent for negative electrode is at least 1wt%, it is possible to achieve better adhesion between active substances or between the active substance and the current collector and good cycle property. Also, if the content is not more than 30wt%, the rate of active substance is increased, resulting in increasing the capacity of the negative electrode.

The negative electrode current collector acts to support a negative electrode active substance layer containing the negative electrode active substance bonded by a binding agent, and should have conductivity to transmit electricity to an external terminal. Specifically, the same things as the positive electrode current collector indicated above may be used.

The negative electrode may be fabricated onto the negative electrode current collector using a material for the negative electrode active substance layer containing the negative electrode active substance and the binding agent for negative electrode. The same methods as methods of preparing the positive electrode active substance layer may be used to prepare the negative electrode active substance layer.

### [Electrolytic solution]

The electrolytic solution enables to absorb and emit lithium in the positive electrode and the negative electrode during charge/discharge. The electrolytic solution may be prepared by dissolving an electrolyte in a lithium ion-soluble non-aqueous organic solvent, and the positive electrode and the negative electrode are immersed therein.

The solvent of the electrolytic solution comprises high oxidation potential solvents and low-viscosity solvents. If the electrolytic solution contains a high oxidation potential solvent, the degradation of the electrolytic solution is suppressed even in a high voltage cell of which operating voltage is 4.6V or more with respect to metallic lithium, and cell life may be prolonged. The high oxidation potential solvents include one or two or more selected from propylene carbonate, butylenes carbonate, 4-fluoro-1,3-dioxolane-2-one and 4.5-difluoro-1,3-dioxolane-2-one. Among others, preferably 4-fluoro-1,3-dioxolane-2-one (FEC) or propylene carbonate (PC) is used since it acts to suppress the degradation of other mixed solvents during high voltage charge/discharge, in a manner similar to ethylene carbonate (EC).

Also, a concentration of the high oxidation potential solvents in the solvent of electrolytic solution is not less than 5vol% and not more than 60vol%. If the concentration of the high oxidation potential solvent in the solvent of the electrolytic solution is at least 5vol%, the degradation of the electrolytic solution is suppressed even in a cell having a high operating voltage. If the concentration is not more than 60vol%, an increase in viscosity of the electrolytic solution is suppressed, and the electrolytic solution has liquidity to sufficiently immerse the positive electrode and the negative electrode in the electrolytic solution.

In addition, when the electrolytic solution contains a low-viscosity solvent, an increase in viscosity of the electrolytic solution is suppressed, and the electrolytic solution may have ion conductivity. The low-viscosity solvents include one or two compounds selected from dimethyl carbonate and fluorinated chain-type ethers.

As the fluorinated chain-type ethers, those of 2∼8 carbon atoms are preferably used. If the number of carbon atoms is not more than 8, viscosity increase of the electrolytic solution may be suppressed. Fluorinated chain-type ethers in which 30atom% to 95atom% of hydrogen atoms in alkyl groups are substituted with fluorine atoms are preferred. If fluorine substitution is at least 30atom%, sufficient oxidation resistance is obtained. Also, if fluorine substitution is not more than 95atom%, sufficient reduction resistance is obtained, and the reaction with the negative electrode may be suppressed. Specific examples of fluorinated chain-type ethers may include 1,1,2,2-tetrafluoroethyl-2,2,3,3-tetrafluoropropylether, 2,2,3,3,3-pentafluoropropyl-1,1,2,2-tetrafluoroethylether, 1,1,2,3,3,3-hexafluoropropylethylether, 2,2,3,4,4,4-hexafluorobutyldifluoromethylether, 1,1-difluoropropyl-2-fluoropropylether, 1,1,3-trifluoropropyl-2-fluoropropylether, 1,1,5-trifluoropentyl-1,1,2,2-tetrafluoroethylether or the like. Among others, 1,1,2,2-tetrafluoroethyl-2,2,3,3-tetrafluoropropylether, 2,2,3,3,3-pentafluoropropyl-1,1,2,2-tetrafluoroethylether, 2,2,3,4,4,4-hexafluorobutyldifluoromethylether, 1,1-difluoropropyl-2-fluoropropylether or 1,1,3-trifluoropropyl-2-fluoropropylether are preferably used since they have low reactivity in the positive electrode and the negative electrode.

A content of the low-viscosity solvents in the solvent of the electrolytic solution is preferably not less than 5vol% and not more than 80vol%, and more preferably not less than 10vol% and not more than 60vol%. If the concentration of the low-viscosity solvents in the solvent of the electrolytic solution is at least 5vol%, the electrolytic solution may have low viscosity required to immerse the electrodes therein and good ion conductivity.

Furthermore, the solvent of the electrolytic solution comprises preferably ethylene carbonate (EC). Since ethylene carbonate has high oxidation resistance and low reactivity with graphite, it is suitable for a cell using the positive electrode operating at a high voltage and the graphite negative electrode. Ethylene carbonate forms a film (Solid Electrolyte Interface: SEI) on the surface of the graphite negative electrode during primary charge. This film acts to suppress the subsequent reaction of the graphite and the electrolytic solution. Similar to ethylene carbonate, 4-fluoro-1,3-dioxolane-2-one (FEC) or propylene carbonate (PC) indicated above may also function to suppress the degradation of other mixed solvents by forming a film onto the surface of the negative electrode, and they are collectively referred to as "film-forming solvents".

To form a film onto the surface of the negative electrode by a film-forming solvent and suppress the degradation of other solvents, a concentration of the film-forming solvent in the solvent of the electrolytic solution is preferable between 10 and 60vol%, and more preferably not less than 20vol% and not more than 60vol%. If the concentration of the film-forming solvent in the solvent of the electrolytic solution is at least 10vol%, SEI is formed to suppress gas generation during repetitive charge and discharge. If the concentration is not more than 60vol%, an adverse effect on operation of a cell due to solidification of EC having a high melting point (37°C) within the cell when the cell is used at a low temperature may be suppressed.

As ratios of mixed solvents in the solvent of the electrolytic solution, the ratios of the film-forming solvents 10∼60vol%, the high oxidation potential solvents excluding FEC 5∼60vol%, and the low-viscosity solvents 10∼80vol% are preferred, and the ratios of the film-forming solvents 20∼60vol%, the high oxidation potential solvents excluding FEC 5∼40vol%, and the low-viscosity solvents 20∼60vol% are more preferred. The sum of these ratios should be 100vol%.

Also, the electrolytic solution may further contain solvents other than solvents indicated above (it is also referred to as "other solvents") as long as they do not adversely affect solvents indicated above. Specific examples may include chain-type carbonates such as ethylmethyl carbonate, diethyl carbonate, dipropyl carbonate, fluorinated ethylmethyl carbonate, fluorinated dimethyl carbonate, or fluorinated diethyl carbonate; or carboxylic esters such as ethyl acetate, methyl propionate, ethyl formate, ethyl propionate, methyl butyric acid, ethyl butyric acid, methyl acetate, methyl formate or fluorinated derivatives thereof. Carboxylic esters having low viscosity may be used instead of chain-type carbonates or fluorinated ethers. Among others, preferably ethyl propionate or methyl acetate is used in terms of voltage resistance and boiling point. Also, examples may include γ-lactones such as γ-butyrolactone; chain-type ethers such as 1,2-ethoxyethane (DEE) or ethoxymethoxyethane (EME); cyclic ethers such as tetrahydrofuran or 2-methyltetrahydrofuran; or aprotic organic solvents such as dimethylsulfoxide, 1,3-dioxolane, formamide, acetoamide, dimethylformamide, dioxolane, acetonitrile, propylnitrile, nitromethane, ethylmonoglyme, trimethoxymethane, dioxolane derivatives, sulforane, methyl-sulforane, 1,3-dimethyl-2-imidazolidinone, 3-methyl-2-oxazolidinone, propylene carbonate derivatives, tetrahydrofuran derivatives, ethylethers, 1,3-propanesultone, anisole, N-methylpyrrolidone or others fluorinated compounds. They may be used alone or as any combination of two or more species.

A content of other solvents in the solvent of the electrolytic solution is preferably 0∼30vol%, and more preferably 0∼20vol%.

As an electrolyte that is contained in the electrolytic solution, lithium salts are preferably used. Specific examples of lithium salts may include LiPF₆, LiAsF₆, LiAlCl₄, LiClO₄, LiBF₄, LiSbF₆, LiCF₃SO₃, LiC₄F₉CO₃, LiC(CF₃SO₂)₃, LiN(CF₃SO₂)₂, LiN(C₂F₅SO₂)₂, LiB₁₀Cl₁₀, lower aliphatic lithium carboxylate, chloroborane lithium, lithium tetraphenylborate, LiBr, LiI, LiSCN, LiCl, imides, boron fluorides or the like.

A concentration of the electrolyte in the electrolytic solution is preferably not less than 0.01mol/L and not more than 3mol/L, and more preferably not less than 0.5mol/L and not more than 1.5mol/L. If the concentration of the electrolyte is within the ranges indicated above, cells having improved stability, increased reliability, and lowered environmental effect may be obtained.

### [Separator]

Any separator may be used as long as it suppresses a contact of the positive electrode with the negative electrode, allows penetration of charge carriers, and has durability in the electrolytic solution. Specific materials suitable for the separator may include polyolefin, for example polypropylene or polyethylene based microporous membranes, celluloses, polyethylene terephthalate, polyimide, polyfluorovinylidene or the like. They may be used as a form such as porous film, fabric or nonwoven fabric.

### [Cell cover body]

Preferably, the cover body should have strength to stably hold the positive electrode, the negative electrode, the separator and the electrolytic solution, is electrochemically stable to these components, and has liquid-tightness. As specific examples, stainless steel, nickel-plated iron, aluminum, titanium, or alloys thereof or those plating, metal laminate resin or the like may be used. As resins suitable for the metal laminate resin, polyethylene, polypropylene, polyethylene terephthalate or the like may be used. They may be used as a structure of a single layer or two or more layers.

In a lithium secondary cell having configurations as described above, primary charge capacity is 140∼155mAh/g with respect to about 148mAh/g that is a theoretical value when all lithium ions are emitted. Also, primary discharge capacity is 120∼135mAh/g, which corresponds to about 90% of the charge capacity. This lithium secondary cell has high energy density, suppresses the degradation of the electrolyte during subsequent repetitive charge and discharge to maintain high energy density, and has excellent cycle property.

A form of the lithium secondary cell may have any of cylindrical, flat winding rectangular, stacked rectangular, coin, flat winding laminate or stacked laminate forms.

As an example of the lithium secondary cell as indicated above, a coin-type secondary cell is shown in FIG. 1. The coin-type secondary cell has a structure that the positive electrode active substance layer 1 containing the lithium-manganese oxide complex capable of absorbing and emitting lithium ions provided on the positive electrode current collector 3 made of a metal such as aluminum foil and the negative electrode active substance layer 2 containing the graphite coating with low-crystallinity carbon capable of absorbing and emitting lithium ions provided on the negative electrode current collector 4 made of a metal such as copper foil disposed opposite each other with the separator 5 made of a polypropylene microporous membrane intervened to prevent a contact therebetween are accommodated in laminate cover bodies 6 and 7. The electrolytic solution is filled within the laminate cover bodies. A positive electrode tab 9 connected to the positive electrode current collector 3 and a negative electrode tab 8 connected to the negative electrode current collector 4 are drawn from external surfaces of the laminate cover bodies, respectively, to connect to an external power supply or terminals of a device during charge/discharge.

### Examples

Hereinafter, the lithium secondary cell according to the present invention will be described in detail.

### [Examples 1∼4, Comparative Examples 1∼7], all falling outside of the scope of the claims.

### [Fabrication of positive electrode]

A positive electrode active substance was prepared as follows. Ingredients MnO₂, NiO and Li₂CO₃ were weighed so that a desired metal composition ratio was obtained. These ingredients were grinded and mixed. After mixing, the resulting power was fired at a firing temperature of 500∼1000°C for 8h to obtain LiNi_{0.5}Mn_{1.5}O₄. The specific surface area of the resulting positive electrode active substance was 0.1∼2.0m²/g.

A mixture for positive electrode was prepared by mixing the resulting positive electrode active substance, 5wt% polyfluorovinylidene as a binding agent and 5wt% carbon black as an electroconductive agent and the mixture is dispersed in N-methyl-2-pyrrolidone to obtain slurry. The slurry was uniformly coated onto one surface of an aluminum current collector having 20µm thickness. A thickness of coated layer was adjusted such that primary charge capacity per unit area was 2.5mAh/cm². After drying, compression molding by a roll press was performed to fabricate a positive electrode.

### [Fabrication of negative electrode]

As a negative electrode active substance, graphite coating by low-crystallinity carbon was used. The negative electrode active substance was dispersed in a solution of PVDF in N-methylpyrrolidone to obtain slurry. A weight ratio of the negative electrode active substance to a binding agent was 90/10. The slurry was uniformly coated onto a Cu current collector having 10µm thickness. A thickness of coated layer was adjusted such that primary charge capacity was 3.0mAh/cm². After drying, compression molding by a roll press was performed to fabricate a negative electrode.

### [Preparation of electrolytic solution]

An electrolytic solution was prepared by mixing LiPF₆ as an electrolyte at 1mol/L concentration in a mix-solvent in which ethylene carbonate (EC), dimethyl carbonate (DMC), propylene carbonate (PC), butylene carbonate (BC), 4-fluoro-1,3-dioxolane-2-one (FEC) and 4,5-difluoro-1,3-dioxolane-2-one (FEC2) were mixed at a volume ratio indicated in Table 1.

### [Fabrication of coin-type secondary cell]

A microporous polypropylene film having 25µm thickness was used as a separator. A positive electrode and a negative electrode that are cut into 3cm x 1.5cm respectively, with a tab connected to each end, were disposed opposite each other with the separator intervened. The resulting structure was disposed within a laminate cover body. An electrolytic solution was filled within the cover body, an end of each tab was drawn outwardly from the cover body, and the laminate of the cover body was sealed to obtain the coin-type secondary cell shown in FIG. 1. Using the resulting coin-type secondary cell, primary charge/discharge was performed and capacity was measured. The result is shown in Table 1.

### [Charge/Discharge]

The resulting coin-type lithium secondary cell was charged at a constant current and voltage at 20°C, and subsequently was discharged at a constant current to measure discharge capacity. The discharge capacity was about 8mAh. The charge and discharge were performed under the following conditions.

### <Charge conditions>

Final voltage: 4.8V
Current: 9.75mA
Time: 2.5h

### <Discharge conditions>

Final voltage: 3.0V
Current: 9mA

Then, this cell was subjected to repetitive cycles of charge at a constant current and voltage and discharge at a constant current at 20 °C and 45°C. After 50 cycles, discharge capacity was measured. The charge and discharge were performed under the following conditions.

### <Charge conditions>

Final voltage: 4.8V
Current: 8mA
Time: 2.5h

### <Discharge conditions>

Final voltage: 3.0V
Current: 8mA

**[Table 1]**

| | Solvent of electrolytic solution (Ratio by volume) | Negative electrode materials | Capacity after 20°C 50 cycles [mAh] | Capacity after 45°C 50 cycles [mAh] |
|---|---|---|---|---|
| Comp. Exam. 1 | EC/DMC=40/60 | Graphite | 6.7 | 4.8 |
| Comp. Exam. 2 | EC/DMC=60/40 | Graphite | 2.1 | 5.0 |
| Comp. Exam. 3 | EC/DMC/PC=50/40/10 | Graphite | 2.1 | 1.8 |
| Comp. Exam. 4 | EC/DMC/BC=50/40/10 | Graphite | 3.1 | 2.7 |
| Comp. Exam. 5 | EC/DMC/FEC=50/40/10 | Graphite | 5.2 | 4.9 |
| Comp. Exam. 6 | EC/DMC=40/60 | Surface-treated graphite | 6.7 | 5.1 |
| Comp. Exam. 7 | EC/DMC=60/40 | Surface-treated graphite | 4.1 | 5.2 |
| Example 1 | EC/DMC/PC=50/40/10 | Surface-treated graphite | 7.2 | 6.2 |
| Example 2 | EC/DMC/BC=50/40/10 | Surface-treated graphite | 7.1 | 6.3 |
| Example 3 | EC/DMC/FEC=50/40/10 | Surface-treated graphite | 7.3 | 6.3 |
| Example 4 | EC/DMC/FEC2=50/40/10 | Surface-treated graphite | 7.0 | 6.1 |

In said Table, abbreviations represent the following compounds. The same is true of other tables.
EC: ethylene carbonate
DMC: dimethyl carbonate
PC: propylene carbonate
FEC: 4-fluoro-1,3-dioxolane-2-one
FEC2: 4,5-difluoro-1,3-dioxolane-2-one
BC: butylene carbonate

As can be seen from above, in cases of Examples using surface-treated graphite and high oxidation potential solvents as well as low-viscosity solvents, the lowering of capacity was suppressed after charge/discharge cycles, while in cases of Comparative Examples 1∼5 using graphite and Comparative Examples 6 and 7 using surface-treated graphite but not using high oxidation potential solvents, capacity was lowered after charge/discharge cycles.

### [Examples 5∼9, Comparative Examples 8∼10], all falling outside of the scope of the claims.

Nine graphite materials were used as a negative electrode active substance. Surface crystallinity of these graphite materials was determined by Laser Raman scattering. A ratio (ID/IG) of the intensity of peak in D band (around 1360cm⁻¹) (ID) to the intensity of peak in G band (around 1600cm⁻¹) (IG), which was obtained by Raman Analysis, was calculated. The results are shown in Table 2.

Further, inner crystallinity of these negative electrode active substances was determined by X-ray diffraction. A layer spacing in 002 face d₀₀₂ of graphite were measured.

Cells were fabricated and subjected to charge/discharge using the same method as Example 1 except for using these negative electrode active substances, LiNi_{0.5}Mn_{1.5}O₄ as a positive electrode active substance, and EC/DMC/PC=50/40/10 (by volume) as a solvent of an electrolytic solution. The results are shown in Table 2.

**[Table 2]**

| | Negative electrode materials | Layer spacing of Graphite in d002 face [nm] | ID/IG ratio of Laser Raman Analysis | Capacity after 20°C 50 cycles [mAh] | Capacity after 45°C 50 cycles [mAh] |
|---|---|---|---|---|---|
| Comparative Example 8 | Negative electrode Material 1 | 0.3361 | 0.07 | 2.1 | 1.8 |
| Comparative Example 9 | Negative electrode Material 2 | 0.3352 | 0.05 | 1.9 | 1.6 |
| Example 4 | Negative electrode Material 3 | 0.3360 | 0.28 | 7.2 | 6.1 |
| Example 5 | Negative electrode Material 4 | 0.3361 | 0.14 | 6.9 | 5.9 |
| Example 6 | Negative electrode Material 5 | 0.3352 | 0.16 | 7.0 | 5.8 |
| Example 7 | Negative electrode Material 6 | 0.3347 | 0.22 | 7.3 | 6.2 |
| Example 8 | Negative electrode Material 7 | 0.3359 | 0.18 | 7.1 | 6.0 |
| Example 9 | Negative electrode Material 8 | 0.3358 | 0.26 | 7.2 | 6.3 |
| Comparative Example 10 | Negative electrode Material 9 | Amorphous, not measurable | 0.4 | 4.6 | 4.1 |

As can be seen from above, in cases of Examples 4∼9 using graphite of which surface is coated by low-crystallinity carbon, the lowering of capacity was suppressed after charge /discharge cycles, while in cases of Comparative Examples 8 and 9 using graphite of which surface is not coated by low-crystallinity carbon and Comparative Example 10 using carbon material having amorphous surface, capacity was lowered after charge/discharge cycles.

### Examples 10-20, 23-26 and comparative example 11, all falling outside of the scope of the claims.

### Examples 21 and 22, falling under the scope of the claims.

Cells were fabricated and subjected to charge/discharge using the same method as Example 1 except for using solvents of electrolytic solution listed in Table 3, and Negative electrode material 8 indicated in Table 2 as the negative electrode active substance. The results are shown in Table 3.

**[Table 3]**

| | Solvents of electrolytic solution (Ratio by volume) | Capacity after 20°C 50 cycles [mAh] | Capacity after 45°C 50 cycles [mAh] |
|---|---|---|---|
| Comp. Exam. 6 | EC/DMC=40/60 | 6.7 | 5.1 |
| Comp. Exam. 7 | EC/DMC=60/40 | 4.1 | 5.2 |
| Example 1 | EC/DMC/PC=50/40/10 | 7.2 | 6.2 |
| Example 10 | EC/DMC/PC=50/45/5 | 7.0 | 5.8 |
| Example 11 | EC/DMC/PC=30/40/30 | 7.2 | 6,1 |
| Example 12 | EC/DMC/PC=20/40/40 | 7.0 | 5.7 |
| Example 13 | EC/DMC/PC=60/20/20 | 7.0 | 6.0 |
| Example 14 | EC/DMC/PC=50/10/40 | 7.1 | 5.6 |
| Comp. Exam. 11 | EC/PC=50/50 | 6.8 | 5.1 |
| Example 3 | EC/DMC/FEC=50/40/10 | 7.2 | 6.3 |
| Example 16 | EC/DMC/FEC=30/40/30 | 7.3 | 6.1 |
| Example 17 | EC/DMC/FEC=20/40/40 | 6.9 | 5.9 |
| Example 18 | EC/F-EPE/PC=50/40/10 | 7.1 | 6.3 |
| Example 19 | EC/F-EPE/BC=50/40/10 | 7.2 | 6.1 |
| Example 20 | EC/F-EPE/PC=30/60/10 | 7.1 | 6.2 |
| Example 21 | EC/F-EPE/FEC=30/60/20 | 7.1 | 6.3 |
| Example 22 | EC/F-EPE/FEC2=50/40/10 | 7.0 | 6.2 |
| Example 23 | EC/F-EPE/DMC/PC=50/30/10/10 | 7.2 | 6.2 |
| Example 24 | EC/F-EPE/DMC/PC=40/30/20/10 | 7.2 | 6.0 |
| Example 25 | FEC/F-EPE=50/50 | 7.1 | 6.2 |
| Example 26 | FEC/F-EPE/PC=40/50/10 | 7.2 | 6.1 |

In said Table, F-EPE represents 1,1,2,2-tetrafluoroethyl-2,2,3,3-tetrafluoropropylether.

In cases of Examples 10∼26 using low-viscosity solvents and high-oxidation-potential solvents, the lowering of capacity was suppressed after charge/discharge cycles, while in cases of Comparative Examples 6 and 7 that do not use high-oxidation-potential solvents and Comparative Example 11 that does not use low-viscosity solvents, capacity was lowered after charge/discharge cycles.

### [Examples 27∼34, Comparative Example 12], all falling outside of the scope of the claims.

Cells were fabricated and subjected to charge/discharge using the same method as Example 1 except for using solvents of electrolytic solution listed in Table 4, 0.75mol/L LiPF₆ as the electrolyte, and Negative electrode material 8 indicated in said Table 2 as the negative electrode active substance. The results are shown in Table 4.

**[Table 4]**

| | Solvents of electrolytic solution (Ratio by volume) | Capacity after 20°C 50 cycles [mAh] | Capacity after 45°C 50 cycles [mAh] |
|---|---|---|---|
| Example 27 | EC/PC/F-EPE=10/30/60 | 7.1 | 6.3 |
| Example 28 | FEC/PC/F-EPE=5/35/60 | 7.2 | 6.2 |
| Example 29 | EC/PC/F-EPE/FE1=10/30/50/10 | 7.2 | 6.3 |
| Example 30 | EC/PC/F-EPE/FE2= 10/30/50/10 | 7.1 | 6.0 |
| Example 31 | EC/PC/F-EPE/FE3=10/30/50/10 | 7.2 | 6.3 |
| Example 32 | EC/PC/F-EPE/FE4=10/30/50/10 | 7.1 | 6.3 |
| Example 33 | EC/PC/F-EPE/FE5=10/30/50/10 | 7.2 | 6.2 |
| Example 34 | EC/PC/F-EPE/FE6=10/30/50/10 | 7.0 | 6.0 |
| Comp. Exam. 12 | EC/F-EPE=30/70 | 6.5 | 5.4 |

In said Table, abbreviations represent the following compounds.

FE1: 2,2,3,3,3-pentafluoropropyl-1,1,2,2-tetrafluoroethylether
FE2: 1,1,2,3,3,3-hexafluoropropylethylether
FE3: 2,2,3,4,4,4-hexafluorobutyldifluoromethylether
FE4: 1,1-difluoropropyl-2-fluoropropylether
FE5: 1,1,3-trifluoropropyl-2-fluoropropylether
FE6: 1,1,5-trifluoropentyl-1,1,2,2-tetrafluoroethylether

Electrolytic solution containing fluorinated chain-type ethers and PC or FEC exhibited good life property. As indicated in Comparative Example 12, in case of electrolytic solution containing EC and fluorinated chain-type ethers but not containing PC or FEC, capacity was lowered after cycles.

### [Examples 35∼43], all falling outside of the scope of the claims.

Positive electrode active substance were prepared using the same method as Example 1 except for weighing ingredients MnO₂, NiO, Fe₂O₃, TiO₂, B₂O₃, CoO, Li₂CO₃, MgO, Al₂O₃ and LiF as metal composition ratios indicated in Table 5. The specific surface areas of the resulting positive electrode active substances were 0.1∼2.0m²/g.

Cells were fabricated and subjected to charge/discharge using the same method as Example 1 except for using positive electrode active substances listed in Table 5, Negative electrode material 8 indicated in said Table 2 as the negative electrode active substance, and EC/DMC/PC=50/40/10(by volume) as the solvent of electrolytic solution. The results are shown in Table 5.

**[Table 5]**

| | Materials for positive electrode | Capacity after 20°C 50 cycles [mAh] | Capacity after 45°C 50 cycles [mAh] |
|---|---|---|---|
| Example 35 | LiNi0.5Mn1.5O4 | 7.2 | 6.2 |
| Example 36 | LiNi0.5Mn1.35Ti0.15O4 | 7.4 | 6.5 |
| Example 37 | LiNi0.5Mn1.48Al0.02O4 | 7.3 | 6.2 |
| Example 38 | LiNi0.5Mn1.48Mg0.02O4 | 7.3 | 6.3 |
| Example 39 | LiNi0.5Mn1.49B0.01O4 | 7.3 | 6.1 |
| Example 40 | LiNi0.5Mn1.48Al0.05O3.95F0.05 | 7.2 | 6.2 |
| Example 41 | LiNi0.5Mn1.48Si0.02O3.95F0.05 | 7.3 | 6.2 |
| Example 42 | LiNi0.4Co0.2Mn1.25Ti0.15O4 | 6.9 | 5.8 |
| Example 43 | LiNi0.4Fe0.2Mn1.25Ti0.15O4 | 6.8 | 5.7 |

All of positive electrode materials operating at 4.5V or higher exhibited good cycle property.

### [Examples 44∼52], all falling outside of the scope of the claims.

Cells were fabricated and subjected to charge/discharge using the same method as Example 1 except for using positive electrode active substances listed in Table 6, Negative electrode material 8 indicated in Table 2 as the negative electrode active substance, EC/PC/F-EPE=10/30/50/10 (by volume) as the solvent of electrolytic solution, 0.75mol/L LiPF₆ as the electrolyte. The results are shown in Table 6.

**[Table 6]**

| | Materials for positive electrode | Capacity after 20°C 50 cycles [mAh] | Capacity after 45°C 50 cycles [mAh] |
|---|---|---|---|
| Example 44 | LiNi0.5Mn1.5O4 | 7.2 | 6.3 |
| Example 45 | LiNi0.5Mn1.35Ti0.15O4 | 7.4 | 6.6 |
| Example 46 | LiNi0.5Mn1.48Al0.02O4 | 7.3 | 6.4 |
| Example 47 | LiNi0.5Mn1.48Mg0.02O4 | 7.4 | 6.4 |
| Example 48 | LiNi0.5Mn1.49B0.01O4 | 7.3 | 6.2 |
| Example 49 | LiNi0.5Mn1.48A10.05O3.95F0.05 | 7.3 | 6.4 |
| Example 50 | LiNi0.5Mn1.48Si0.02O3.95F0.05 | 7.3 | 6.4 |
| Example 51 | LiNi0.4Co0.2Mn1.25Ti0.15O4 | 7.1 | 6.1 |
| Example 52 | LiNi0.4Fe0.2Mn1.25Ti0.15O4 | 7.0 | 6.0 |

The lithium secondary cell according to the present invention is fabricated by using the positive electrode comprising the lithium-manganese oxide complex represented by the formula (1) that operates at a high voltage of 4.5V or more with respect to metallic lithium, the graphite coating by low-crystallinity carbon and the electrolytic solution containing the high oxidation potential solvent and the low-viscosity solvent (ethylene carbonate), and consequently the cell suppresses the lowering of capacity after charge/discharge cycles at a high temperature, and has high operating voltage, high energy density and long cell life under any environment.

The present invention is applicable to all industrial fields that require power supply and industrial fields that relate to transmission, storage and supply of electrical energy. Specifically, the present invention is applicable to power supply for mobile apparatuses such as mobile phone, notebook computer or the like.

## Claims

1. A lithium secondary cell wherein
a positive electrode comprises a lithium-manganese oxide complex represented by formula (1) as a positive electrode active substance;
Liₐ(MₓMn_{2-x-y}X_{y})(O_{4-w}Z_{w}) (1)
(wherein M represents one or two or more selected from Co, Ni, Fe, Cr and Cu; X represents one or two or more selected from Li, B, Na, Mg, Al, Ti, Si, K and Ca; Z represents one or two selected from F and Cl; and x, y and z represent numerical values satisfying 0.4≦x≦1.2, 0≦y, x+y<2, 0≦a≦1.2, 0≦w≦1); a negative electrode comprises graphite of which surface is coated by low-crystallinity carbon as a negative electrode active substance; and an electrolytic solution comprises one or two or more high-oxidation-potential solvents selected from 4-fluoro-1,3-dioxolane-2-one and 4,5-difluoro-1,3-dioxolane-2-one within a range of not less than 5 vol% and not more than 60 vol%, one or two low-viscosity solvents selected from fluorinated chain-type ether in the range of not less than 5 vol% and not more than 80 vol%, and ethylene carbonate in the range of not less than 10 vol% and not more than 60 vol%.

2. The lithium secondary cell of claim 1 wherein layer spacing in 002 face of the graphite d₀₀₂ is not less than 0.33 nm and not more than 0.34 nm.

3. The lithium secondary cell of claim 1 or 2 wherein the graphite has not less than 0.08 and not more than 0.5 of a ratio of the intensity of D peak (ID) that is emerged in the range of 1300 cm⁻¹ to 1400 cm⁻¹ to the intensity of G peak (IG) that is emerged in the range of 1550 cm⁻¹ to 1650 cm⁻¹ (ID/IG) in a Raman spectrum of Laser Raman Analysis.

4. The lithium secondary cell of any one of claims 1 to 3 wherein the fluorinated chain-type ether is one or two compounds selected from 1,1,2,2-tetrafluoroethyl-2,2,3,3-tetrafluoropropylether, 2,2,3,3,3-pentafluoropropyl-1,1,2,2-tetrafluoroethylether, 1,1,2,3,3,3-hexafluoropropylethylether, 2,2,3,4,4,4-hexafluorobutyldifluoromethylether, 1,1-difluoropropyl-2-fluoropropylether, 1,1,3-trifluoropropyl-2-fluoropropylether and 1,1,5-trifluoropentyl-1,1,2,2-tetrafluoroethylether.

5. The lithium secondary cell of any one of claims 1 to 4 wherein in the formula (1), M represents Ni.

6. The lithium secondary cell of any one of claims 1 to 5 wherein in the formula (1), x is not less than 0.4 and not more than 0.6.

7. The lithium secondary cell of any one of claims 1 to 6 wherein in the formula (1), y is not less than 0 and not more than 0.2.

## Patentansprüche

1. Lithium-Sekundärzelle, wobei
eine positive Elektrode einen Lithiummanganoxidkomplex, der durch Formel (1) dargestellt wird, als eine aktive Substanz der positiven Elektrode umfasst;
Liₐ(MₓMn_{2-x-y}X_{y})(O_{4-w}Z_{w}) (1)
(wobei M eines oder zwei oder mehr ausgewählt aus Co, Ni, Fe, Cr und Cu darstellt; X eines oder zwei oder mehr ausgewählt aus Li, B, Na, Mg, Al, Ti, Si, K und Ca darstellt; Z eines oder zwei ausgewählt aus F und Cl darstellt; und x, y und z Zahlenwerte darstellen, die 0,4≦x≦1,2, 0≦y, x+y<2, 0≦a≦1,2, 0≦w≦1 erfüllen); eine negative Elektrode Graphit umfasst, dessen Oberfläche mit Kohlenstoff geringer Kristallinität als eine aktive Substanz der negativen Elektrode beschichtet ist; und eine Elektrolytlösung eines oder zwei oder mehr Lösungsmittel mit hohem Oxidationspotenzial ausgewählt aus 4-Fluor-1,3-dioxolan-2-on und 4,5-Difluor-1,3-dioxolan-2-on innerhalb eines Bereiches von nicht weniger als 5 Vol.-% und nicht mehr als 60 Vol.-%, ein oder zwei Lösungsmittel niedriger Viskosität ausgewählt aus fluoriertem Ether vom Kettentyp in dem Bereich von nicht weniger als 5 Vol.-% und nicht mehr als 80 Vol.-% und Ethylencarbonat in dem Bereich von nicht weniger als 10 Vol.-% und nicht mehr als 60 Vol.-% umfasst.

2. Lithium-Sekundärzelle gemäß Anspruch 1, wobei ein Schichtabstand in der 002-Ebene des Graphits d₀₀₂ nicht weniger als 0,33 nm und nicht mehr als 0,34 nm ist.

3. Lithium-Sekundärzelle gemäß Anspruch 1 oder 2, wobei das Graphit nicht weniger als 0,08 und nicht mehr als 0,5 eines Verhältnisses der Intensität eines D-Peaks (ID), der in dem Bereich von 1300 cm⁻¹ bis 1400 cm⁻¹ auftritt, zu der Intensität eines G-Peaks (IG), der in dem Bereich von 1550 cm⁻¹ bis 1650 cm⁻¹ auftritt, (ID/IG) in einem Raman-Spektrum einer Laser-Raman-Analyse aufweist.

4. Lithium-Sekundärzelle gemäß einem der Ansprüche 1 bis 3, wobei der fluorierte Ether vom Kettentyp eine oder zwei Verbindungen ausgewählt aus 1,1,2,2-Tetrafluorethyl-2,2,3,3-tetrafluorpropylether, 2,2,3,3,3-Pentafluorpropyl-1,1,2,2-tetrafluorethylether, 1,1,2,3,3,3-Hexafluorpropylethylether, 2,2,3,4,4,4-Hexafluorbutyldifluormethylether, 1,1-Difluorpropyl-2-fluorpropylether, 1,1,3-Trifluorpropyl-2-fluorpropylether und 1,1,5-Trifluorpentyl-1,1,2,2-tetrafluorethylether ist.

5. Lithium-Sekundärzelle gemäß einem der Ansprüche 1 bis 4, wobei in der Formel (1) M Ni darstellt.

6. Lithium-Sekundärzelle gemäß einem der Ansprüche 1 bis 5, wobei in der Formel (1) x nicht weniger als 0,4 und nicht mehr als 0,6 ist.

7. Lithium-Sekundärzelle gemäß einem der Ansprüche 1 bis 6, wobei in der Formel (1) Y nicht weniger als 0 und nicht mehr als 0,2 ist.

## Revendications

1. Pile secondaire au lithium dans laquelle
une électrode positive comprend un complexe d'oxyde de lithium-manganèse représenté par la formule (1) en tant que substance active d'électrode positive ;
Liₐ(MₓMn_{2-x-y}X_{y})(O_{4-w}Z_{w}) (1)
(dans laquelle M représente un ou deux ou plus de deux éléments choisis parmi Co, Ni, Fe, Cr et Cu ; X représente un ou deux ou plus de deux éléments choisis parmi Li, B, Na, Mg, Al, Ti, Si, K et Ca ; Z représente un ou deux éléments choisis parmi F et Cl ; et x, y et z représentent des valeurs numériques satisfaisant 0,4 ≦ x ≦ 1,2, 0 ≦ y, x + y < 2, 0 ≦ a ≦ 1,2, 0 ≦ w ≦ 1) ; une électrode négative comprend du graphite dont la surface est revêtue de carbone à faible cristallinité en tant que substance active d'électrode négative ; et une solution électrolytique comprend un ou deux ou plus de deux solvants à potentiel d'oxydation élevé choisis parmi la 4-fluoro-1,3-dioxolane-2-one et la 4,5-difluoro-1,3-dioxolane-2-one dans une gamme non inférieure à 5 % en volume et non supérieure à 60 % en volume, un ou deux solvants à faible viscosité choisis parmi un éther de type à chaîne fluorée dans la gamme non inférieure à 5 % en volume et non supérieure à 80 % en volume, et le carbonate d'éthylène dans la gamme non inférieure à 10 % en volume et non supérieure à 60 % en volume.

2. Pile secondaire au lithium selon la revendication 1, dans laquelle l'espacement des couches dans la face 002 du graphite d₀₀₂ est non inférieur à 0,33 nm et non supérieur à 0,34 nm.

3. Pile secondaire au lithium selon la revendication 1 ou 2, dans laquelle le graphite a un rapport entre l'intensité de pic D (ID) qui a émergé dans la plage de 1 300 cm⁻¹ à 1 400 cm⁻¹ et l'intensité de pic G (IG) qui a émergé dans la gamme de 1 550 cm⁻¹ à 1 650 cm⁻¹ (ID/IG, dans un spectre Raman d'analyse Raman au laser, non inférieur à 0,08 et non supérieur à 0,5.

4. Pile secondaire au lithium selon l'une quelconque des revendications 1 à 3, dans laquelle l'éther de type à chaîne fluorée est un ou deux composés choisis parmi le 1,1,2,2-tétrafluoroéthyl-2,2,3,3-tétrafluoropropyléther, le 2,2,3,3,3-pentafluoropropyl-1,1,2,2-tétrafluoroéthyléther, le 1,1,2,3,3,3-hexafluoropropyléthyléther, le 2,2,3,4,4,4-hexafluorobutyldifluorométhyléther, le 1,1-difluoropropyl-2-fluoropropyléther, le 1,1,3-trifluoropropyl-2-fluoropropyléther et le 1,1,5-trifluoropentyl-1,1,2,2-tétrafluoroéthyléther.

5. Pile secondaire au lithium selon l'une quelconque des revendications 1 à 4, dans laquelle, dans la formule (1), M représente Ni.

6. Pile secondaire au lithium selon l'une quelconque des revendications 1 à 5, dans laquelle dans la formule (1), x est non inférieur à 0,4 et non supérieur à 0,6.

7. Pile secondaire au lithium selon l'une quelconque des revendications 1 à 6, dans laquelle dans la formule (1), y est non inférieur à 0 et non supérieur à 0,2.
